(19) Europäisches Patentamt
European Patent Office
Office européen des brevets

(11) **EP 1 834 320 B1**

(12) **EUROPEAN PATENT SPECIFICATION**

(45) Date of publication and mention
of the grant of the patent:
**30.08.2017 Bulletin 2017/35**

(51) Int Cl.:
***G09G 3/34*** *(2006.01)*

(21) Application number: **04802375.8**

(86) International application number:
**PCT/CA2004/002200**

(22) Date of filing: **24.12.2004**

(87) International publication number:
**WO 2006/066380 (29.06.2006 Gazette 2006/26)**

(54) **WIDE COLOR GAMUT DISPLAYS**

DISPLAYS MIT GROSSER FARBSKALA

AFFICHAGES A LARGE GAMME DE COULEURS

(84) Designated Contracting States:
**AT BE BG CH CY CZ DE DK EE ES FI FR GB GR
HU IE IS IT LI LT LU MC NL PL PT RO SE SI SK TR**

(30) Priority: **23.12.2004 US 638122 P**

(43) Date of publication of application:
**19.09.2007 Bulletin 2007/38**

(60) Divisional application:
**14187449.5 / 2 838 080**

(73) Proprietor: **Dolby Laboratories Licensing
Corporation
San Francisco, CA 94103-4813 (US)**

(72) Inventor: **SEETZEN, Helge**
**Vancouver, BC V6K 1W5 (CA)**

(74) Representative: **Porta, Checcacci & Associati
S.p.A**
**Via Trebbia, 20**
**20135 Milano (IT)**

(56) References cited:
**EP-A2- 1 462 844        WO-A-03/077013**
**WO-A-2004/031844    CA-A1- 2 025 104**
**CA-C- 1 315 426        JP-A- H1 039 301**
**JP-A- 2002 099 250    JP-A- 2002 140 038**
**US-A1- 2002 050 958  US-A1- 2004 218 388**
**US-B2- 6 791 636**

**Description**

Technical Field

The invention relates to color displays. The invention may be applied to computer displays, television monitors or the like.

Background

A typical liquid crystal display (LCD) has a backlight and a screen made up of variable-transmissivity pixels in front of the backlight. The backlight illuminates a rear face of the LCD uniformly. A pixel can be made dark by reducing the transmissivity of the pixel. The pixel can be made to appear bright by increasing the transmissivity of the pixel so that light from the backlight can pass through. Images can be displayed on an LCD by applying suitable driving signals to the pixels to create a desired pattern of light and dark areas.

In a typical color LCD, each pixel is made up of individually controllable red, green and blue elements. Each of the elements includes a filter that passes light of the corresponding color. For example, the red element includes a red filter. When only the red element in a pixel is set to transmit light, the light passes through the red filter and the pixel appears red. The pixel can be made to have other colors by applying signals which cause combinations of different transmissivities of the red, green and blue elements.

Fluorescent lamps are typically used to backlight LCDs. PCT publication No. WO03077013A3 entitled HIGH DYNAMIC RANGE DISPLAY DEVICES discloses a high dynamic range display in which LEDs are used as a backlight. US 2002/050958A1, US 2004/218388A1, WO 2004/031844A, and JP 2002/140038A, JP H10 39301, and EP 1 462 844 disclose further displays.

JP 2002 099250 A discloses a display according to the preamble of claim 1.

There is a need for efficient displays. There is a particular need for such displays capable of representing colors in a wide color gamut.

Summary of the Invention

This invention provides displays. In a display according to an example embodiment of the invention, light from an illuminator is projected onto an active area of a modulator. The illuminator comprises an array of light emitters that are independently controllable. The light emitters can be controlled to project a pattern of illumination onto the active area of the modulator. The modulator can be controlled to display a desired image at a viewing location.

The invention also provides methods for displaying color images.

The invention is set forth in claims 1 and 11.

The modulator can comprise a liquid crystal display panel and the light sources can comprise light-emitting diodes.

There is also disclosed an apparatus for displaying images at a viewing area. The apparatus comprises an array comprising a plurality of groups of individually- controllable light sources. The light sources of each group emit light of a corresponding one of a plurality of colors. The apparatus includes a modulator having an active area comprising a plurality of pixels. The active area is illuminated by the array. Each pixel is controllable to vary a proportion of light incident on the active area that is passed to the viewing area. The apparatus further includes a control circuit configured to drive each of the groups of the light sources according to a control signal to project a luminance pattern onto the active area of the modulator. The luminance pattern for each of the groups has a variation in intensity over the active area. The variation is controlled by the control circuit.

Further aspects of the invention and features of specific embodiments of the invention are described below and in the dependent claims.

Brief Description of the Drawings

In drawings which illustrate non-limiting embodiments of the invention,

Figure 1 is a schematic diagram of a display having an illuminator made up of an array of tri-color LEDs;
Figure 1A is a flowchart illustrating a method for generating illuminator and modulator control signals;
Figure 2 is a schematic diagram of an illuminator made up of an array of groups of colored LEDs;
Figure 3 is a diagram illustrating point spread functions of LEDs in an illuminator of a display;
Figure 4 is a graph illustrating the variation of luminance with position along a line on a modulator illuminated by the LEDs of Figure 3;

Figure 5 is a diagram illustrating point spread functions of LEDs in an illuminator of a display wherein LEDs of different colors have different intensities and different point spread functions;
Figure 6 is a graph illustrating the variation of luminance with position along a line on a modulator illuminated by the LEDs of Figure 5;
Figure 7 is a diagram illustrating point spread functions of LEDs in another illuminator of a display wherein LEDs of different colors have different intensities and different point spread functions;
Figure 8 is a graph illustrating the variation of luminance with position along a line on a modulator illuminated by the LEDs of Figure 7; and,
Figure 9 is a flow chart illustrating a method for correcting for light that passes through broadband pixel elements that pass two or more colors of light.

Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

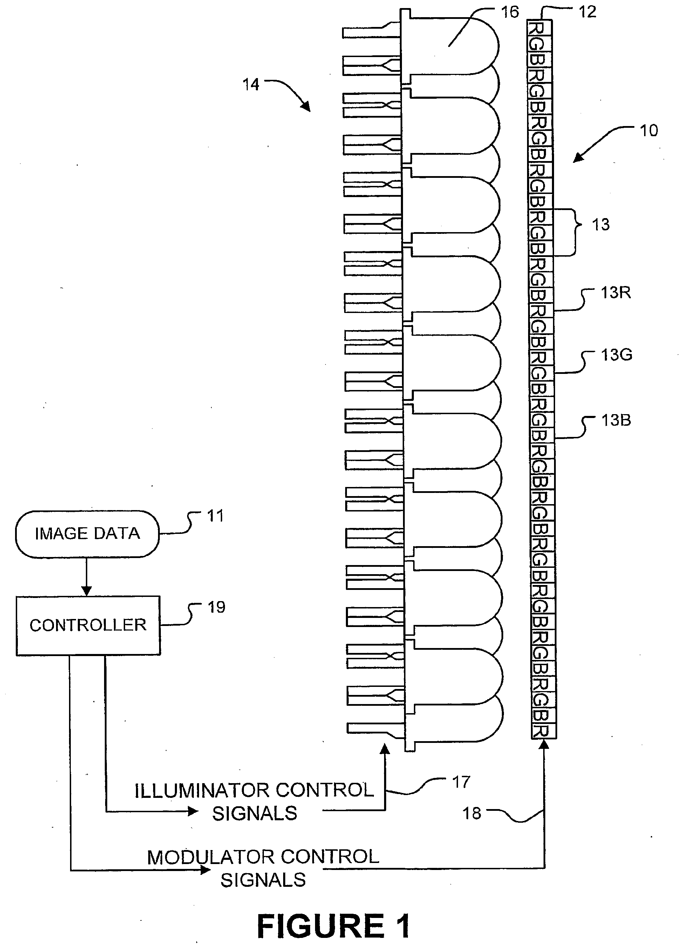

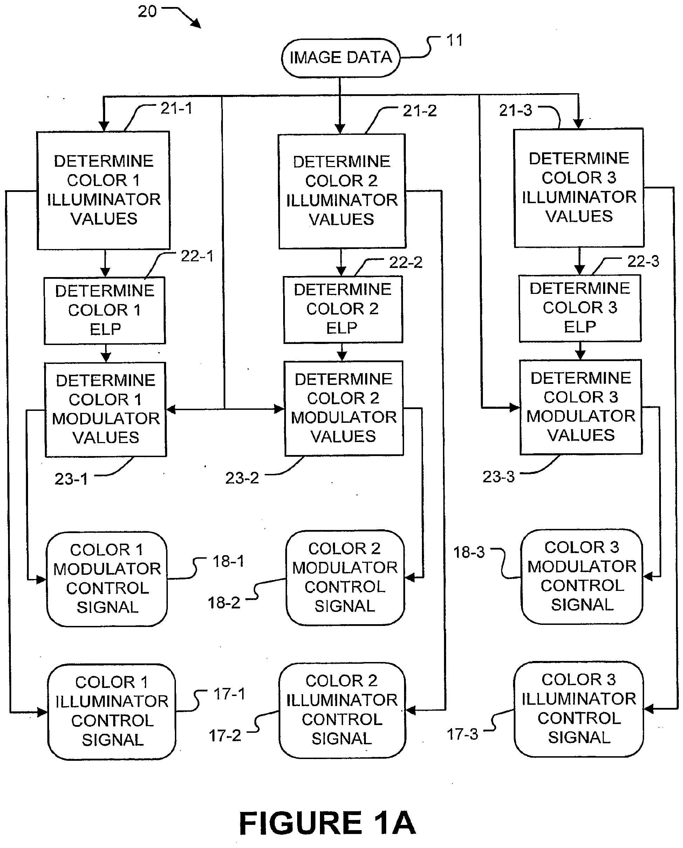

Figure 1 shows a display **10** in which a modulator **12**, which may be an LCD panel, for example, is backlit by an illuminator comprising an array **14** of light emitters **16**. In the illustrated embodiment, light emitters **16** comprise light-emitting diodes (LEDs). In the following description, light emitters **16** are referred to as LEDs **16** and modulator **12** is referred to an LCD panel. Other suitable light sources could be used in place of LEDs **16**. Other suitable modulators could be used in place of LCD panel **12**.

LEDs **16** include separate emitters of light of different colors that may be combined to form a color image. In Figure 1, LEDs **16** include emitters of red, green and blue light. Other color combinations could be provided.

The light emitters may be packaged in discrete packages. In some cases two or more emitters of different colors are packaged in a common package. The emitters of each color are controllable independently of emitters of other colors. Emitters of the same color at different locations in array **14** are controllable independently of one another.

The light emitted by LEDs **16** has narrow bandwidths (typically in the range of 20 nm to 50 nm). LCD panel **12** has pixels **13** which include red green and blue elements **13R**, **13G** and **13B** respectively. Color filters of the red, green and blue elements each have a pass band that passes light of a corresponding one of the colors of the light emitted by LEDs **16** and blocks light of the other colors. Display **10** is capable of displaying very saturated red, green and blue colors. In some embodiments of the invention the passbands of color filters of LCD panel **12** are narrow (i.e. less than 150 nm). The passbands may, for example, have bandwidths in the range of 30 to 100 nm. The passbands do not need to be wide because the light emitted by each LED **16** has a narrow spectrum.

Display **10** can be operated in a mode wherein the brightness of each LED **16** is controlled individually as described, for example, in PCT publication No. WO03077013A3. Figure 1 shows illuminator control signals **17** that control the intensities of LEDs **16** and modulator control signals **18** which control the amounts of light passed by the elements of each of pixels **13**.

Illuminator control signals **17** cause suitable driving circuits to separately control the brightness of LEDs **16** of different colors and, within a particular color, to separately control the brightness of LEDs **16** in different spatial locations. This permits illuminator **14** to project onto modulator **12** a pattern of light that has different mixtures of colors at different locations on modulator **12.**

Figure 1 is schematic in nature. The elements of pixels **13** and LEDs **16** may be arranged in any suitable two dimensional arrangements, not necessarily the arrangements shown.

A display may include a controller **19** that generates illuminator control signals **17** and modulator control signals **18** to display a desired image. The desired image may be specified by image data **11** which directly or indirectly specifies luminance values (and, if the image is a color image, color values) for each pixel. Image data **11** may have any suitable format and may specify luminance and color values using any suitable color model. For example, image data **11** may specify:

- red, green and blue (RGB) color values for each pixel;
- YIQ values wherein each pixel is represented by a value (Y) referred to as the luminance and a pair of values (I, Q) referred to as the chrominance;
- CMY or CMYK values;
- YUV values;
- YCbCr values;
- HSV values; or
- HSL values.

Figure 1A shows a method **20** for generating illuminator control signals **17** and modulator control signals **18.** Method **20** begins by generating illuminator control signals **17** from image data **11.** This is performed separately in blocks **21-1**, **21-2** and **21-3** for each color of LED **16** in array **14.** In the embodiment of Figure 1A, illuminator control signals **17** include signals **17-1, 17-2** and **17-3,** each of which controls one color of LED in array **14.**

Illuminator control signals **17** may be generated by determining in controller **19** an intensity for driving each of LEDs **16** such that LEDs **16** project a desired luminance pattern onto LCD **12.** Preferably, for each of the colors, the luminance of the luminance pattern at each pixel **13** is such that a luminance specified for that pixel **13** by image data **11** can be achieved within the range of modulation of the elements **13R, 13G** and **13B** for that pixel. That is, it is desirable that the luminance **L** be such that:

$$ L \; X \; T_{MIN} \;\; \leq \; L_{IMAGE} \;\; \leq \;\; L \; X \; T_{MAX} \qquad . \qquad\qquad \textbf{(1)} $$

where: $T_{MIN}$ is the minimum transmissivity of a pixel element; $T_{MAX}$ is the maximum transmissivity of the pixel element; and $L_{IMAGE}$ is the luminance for the pixel specified by image data **11.** The relationship of Equation (1) preferably holds separately for each pixel of LED **12** for each color.

Since the relative light output of LEDs **16** of different colors will typically vary from place-to-place on LCD **12,** the color of the light projected onto LCD **12** by the emitters of array **14** will typically vary from place-to-place on array **12.**

Controller **19** may generate modulator control signals **18** by, for each of the elements of each pixel **13** of LCD **12,** dividing the desired luminance specified by image data **11** by the luminance at that element provided by illuminator array **14** when driven by illuminator control signal **17.** The luminance provided by illuminator array **14** may be termed an effective luminance pattern ELP. Since each element **13R**, **13G** or **13B** transmits only light of one of the colors of array **14,** the ELP may be computed separately for each color and the computation to determine modulator control signals **18** may be performed independently for each color.

Method **20** computes ELPs for each color of light in blocks **22-1**, **22-2**, and **22-3.** Method **20** determines the modulator control signal for each color in blocks **23-1**, **23-2** and **23-3.** In the embodiment of Figure **1A**, modulator control signals **18** include signals **18-1**, **18-2** and **18-3** which respectively control elements of first, second and third colors in modulator **12.**

The arrangement of Figure 1 can be operated in a manner that is energy efficient since the pattern of illumination projected by array **14** onto any area of LCD **12** can be made to have a color which approximates that of pixels **13** in that area. For example, where image data specifies that an area of an image should be predominantly red, the backlighting of the corresponding area of LCD **12** can be provided entirely or mostly by red emitters of array **14.** Blue and green emitters in that area may be turned off or operated at reduced levels.

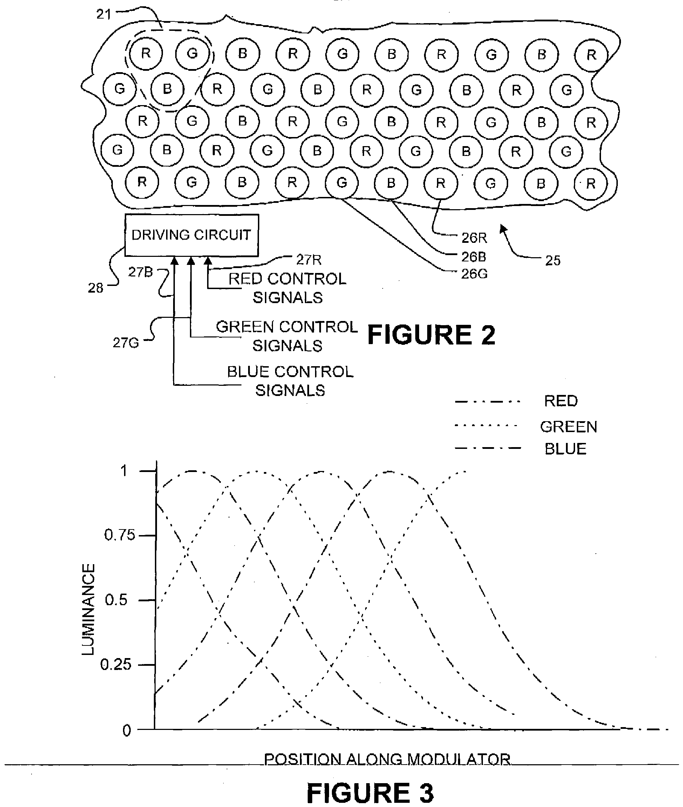

Figure 2 shows an illuminator **25** having a particular arrangement of discrete colored LEDs **26.** In illuminator **25,** LEDs **26** are arranged in groups **21.** Each group **21** includes a red LED **26R,** a green LED **26G** and a blue LED **26B** (collectively LEDs **26**). Figure 2 shows separate illuminator control signals **27R, 27G,** and **27B** for the red, green and blue LEDs respectively (collectively signals **27**). Driving signals **27** cause a driving circuit **28** to control intensities of LEDs **26** to provide a desired luminance pattern on the active area of LCD **12** for each color.

The even distribution of LEDs **26** permits LEDs **26** to provide relatively uniform illumination of an LCD panel for each color of LED **26.** Figure 3 shows example point spread functions for a number of LEDs **26,** lying outside the scope of the claimed invention. In Figure 3:

- Within each color the point spread functions of adjacent LEDs **26** overlap.
- each of LEDs **26** is operating at a maximum output.
- each LED **26** produces light of the same intensity at the peak of its point spread function (indicated as 1.0 in arbitrary units).
- LEDs **26** of each color are uniformly distributed in illuminator **25.**

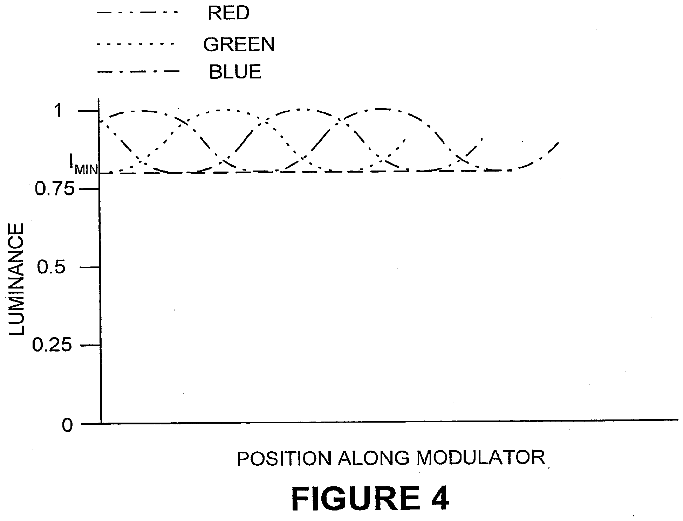

Figure 4 shows the total intensity as a function of position along a line for each of the colors of the LEDs represented by the point spread functions of Figure 3. Each of the curves of Figure 4 can be obtained by adding together the point spread functions for all emitters of one color at each point. It can be seen that, for each color, there is a value $I_{MIN}$ such that the intensity for that color can be made to be greater than or equal to $I_{MIN}$ at every point by suitably controlling the LEDs of the color.

The variation in intensity with position of the ELP for each color may be compensated for by adjusting the transmission of light by modulator **12.**

It is not necessary that the maximum intensity of all of LEDs **26** be the same. LEDs of different colors tend to have different efficiencies. Typically the efficiency (the amount of light generated for a given electrical power) of red LEDs is greater than that of green LEDs. Typical red and green LEDs have greater efficiencies than typical blue LEDs. Up to a point, one can obtain brighter LEDs of any available color at greater expense. Those who design displays can select appropriate LEDs on the basis of factors such as maximum light output, electrical power requirements, and cost. Currently it is common to find it most cost effective to provide red, green and blue LEDs having flux ratios of 3:5:1. With such a flux ratio, the red LEDs are three times brighter than the blue LEDs and the green LEDs are five times brighter than the blue LEDs.

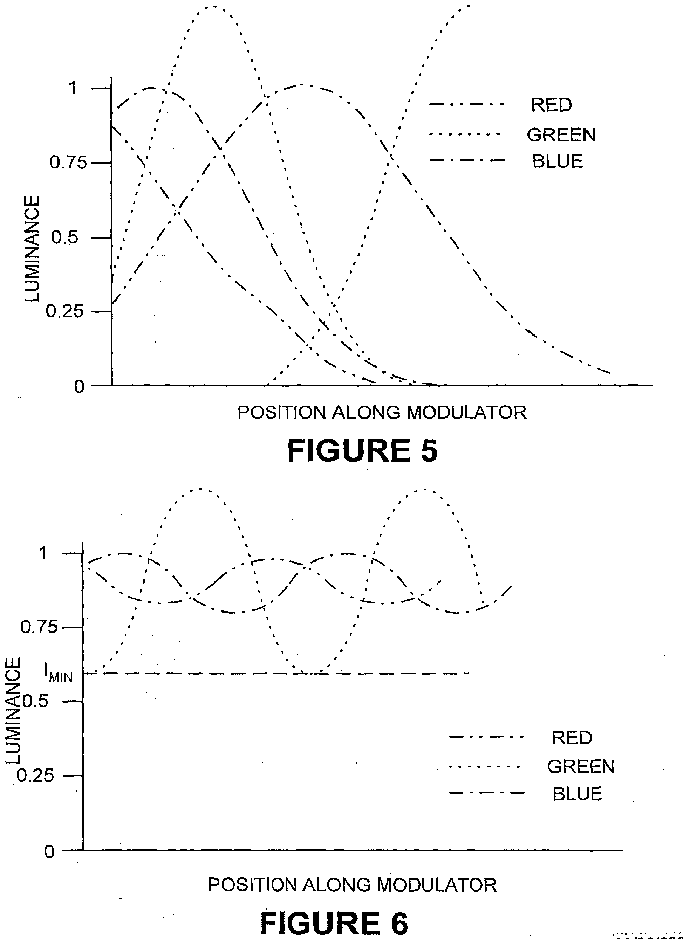

Figure 5 shows example point spread functions for several LEDs wherein the green LEDs emit light of greater intensity than the red and blue LEDs which emit light of the same intensities. In Figure 5, the red LEDs have broader point spread functions than blue LEDs and the blue LEDs have broader point spread functions than green LEDs. The width of a point spread function may be taken as the full width at half maximum (FWHM).

Figure 6 shows the total intensity as a function of position along a line on a modulator (such as LCD **12**) for each of the colors of the LEDs represented by the point spread functions of Figure 5. It can be seen that $I_{MIN}$ is determined by the green LEDs. Light from the blue and red LEDs can achieve intensities in excess of $I_{MIN}$ everywhere along the line along which the curves of Figure 6 are measured.

The maximum intensities, point spread functions, and spacings of LEDs of different colors in an illuminator array may be adjusted to achieve a desired value for $I_{MIN}$ without excess wasted power. In some embodiments of the invention, when all of LEDs **26** are at maximum output, a modulator **12** is illuminated quite uniformly with each color of light and the average intensity of light of each color is substantially equal to (i.e. within $\pm 10\%$ or $\pm 15\%$ of) the average intensity of the light of each of the other colors.

Array **14** includes first light sources having point spread functions of a first width and second light sources having point spread functions of a second width. The first and second light sources emit light of different colors. The first and second light sources are each distributed substantially evenly in array **14**. A ratio of the distance by which neighboring ones of the first light sources are spaced apart to the distance by which neighboring ones of the second light sources are spaced apart in the display may be within a threshold amount, for example 15%, of a ratio of the width of the first and second widths.

The number of LEDs of each color in a illuminator **25** may be at least approximately inversely proportional to the flux ratio of the LEDs. For example, where an illuminator has LEDs of three colors having flux ratios of 3:5:1, then the numbers of LEDs of each of the three colors in the illuminator could be in the ratio 5:3:15. The LEDs of each color are substantially uniformly distributed on the illuminator. In some embodiments, the point spread functions of the LEDs have widths that increase with the spacing between the LEDs. The point spread functions of the LEDs of one color may have widths that are in direct proportion to the spacing between the LEDs of that color.

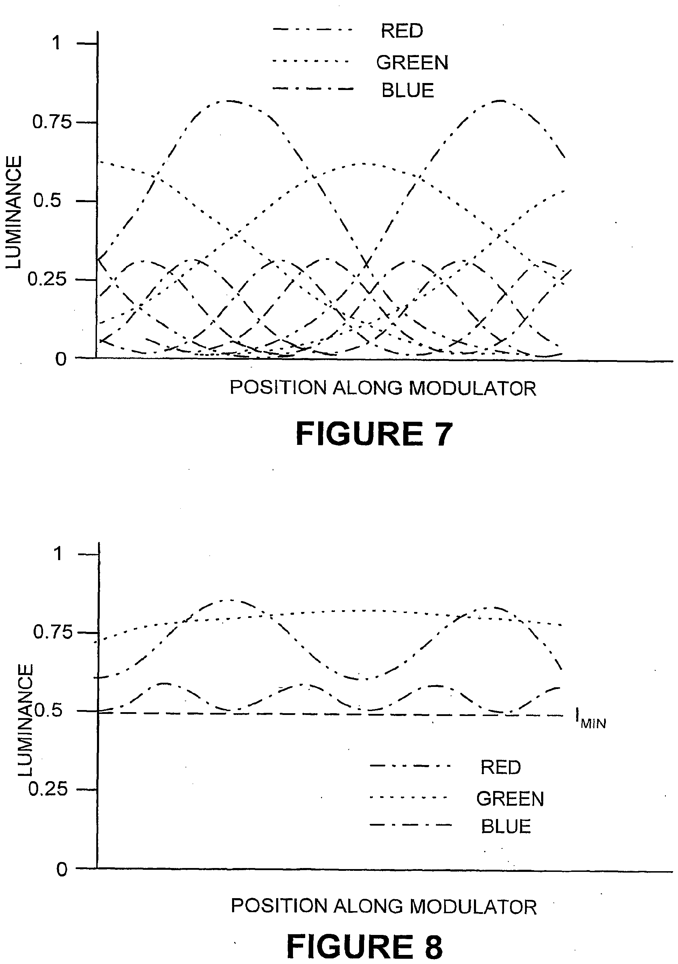

Figure 7 shows point spread functions for an example set of LEDs. In Figure 7, the green LEDs are more intense than the blue LEDs, and have wider point spread functions than the red or blue LEDS. The red LEDs have maximum intensities greater than those of the green or blue LEDs and have spacings, and point spread function widths greater than those of the blue LEDs. Figure 8 shows the total intensity as a function of position along a line on a modulator (such as LCD **12**) for each of the colors of the LEDs represented by the point spread functions of Figure 7.

Some examples provide illuminators having independently-controllable light emitters of more than three colors. For example, yellow or cyan light emitters may be provided in addition to red, green and blue light emitters. Each pixel of modulator **12** may have elements corresponding to each color of light emitted by illuminator **14.** For example, where the illuminator includes red, green, blue and yellow light emitters, each pixel of modulator **12** may have an element that transmits the red light, an element that transmits the green light, an element that transmits the blue light and an element that transmits the yellow light.

In comparative examples, the pixels of modulator **12** include elements that pass, at least partially, two or more colors of light emitted by illuminator **14**. An element that passes two or more colors may be called a broadband element. For example, RGBW LCD panels which include red, green, blue and white elements are available. In such panels the white elements lack filters and so will pass light of any color. The white elements may be called broadband elements.

The broadband elements may be used to increase the brightness of pixels. Because the color of light projected onto modulator **12** by illuminator **14** can be made to approximate the color of the pixel, the brightness of the pixel may be increased by increasing the transmission of light by a broadband element (preferably a "white" broadband element) without significantly decreasing the color saturation of the pixel.

In comparative examples, broadband elements in the pixels are used to control an additional primary color. For example, a white element in a pixel may be used to pass light of one of the colors provided by the illuminator while other elements in the pixel each have filters which pass one other color provided by the illuminator. For example, a RGBW LCD panel may be backlit by an array of light emitters which generate light of basic colors, such as red, green, blue and an additional color, for example, yellow light. The red green and blue light is modulated by corresponding red, green and blue elements in the LCD panel. The yellow light is modulated by the white elements in the LCD panel.

There are three basic image cases for an image area corresponding to one group of light emitters of the illuminator. These are:

- The image area is without saturated yellow. In this case the image can be reproduced without regard to the white pixel. The white pixel may be left off. In the alternative, the white pixel may be opened to allow more RGB light to pass through as appropriate. The yellow LED of the illuminator is off or only on to the extent that it supports the RGB colour brightness in white areas.
- The color of pixels in the image area is predominantly saturated yellow. In this case the red, green and blue LEDs corresponding to the area are substantially off or dim and the yellow LED(s) is on at a bright level. The white sub-pixel is now used predominantly to modulate yellow light from the yellow LED.
- The image area includes a mix of pixels, some displaying saturated yellow and others having significant red, green or blue components. In this case, the illuminator illuminates the pixels of the area with light of all four LED colours. The white pixel elements of the modulator can be opened to allow the yellow light components to pass. The white pixel elements will also allow red green and blue light to pass. The result will be an appropriate yellow area which is slightly desaturated by the RGB light passing through the white filter. This desaturation can be minimized by reducing the light passing through red, green or blue elements of pixels that should be yellow. The slight desaturation is generally acceptable because yellow portions of the area will be small (or this would be an example of the second case). Providing yellow LEDs which can illuminate the modulator with yellow light which is somewhat brighter than the red, green or blue light components can further reduce the desaturation.

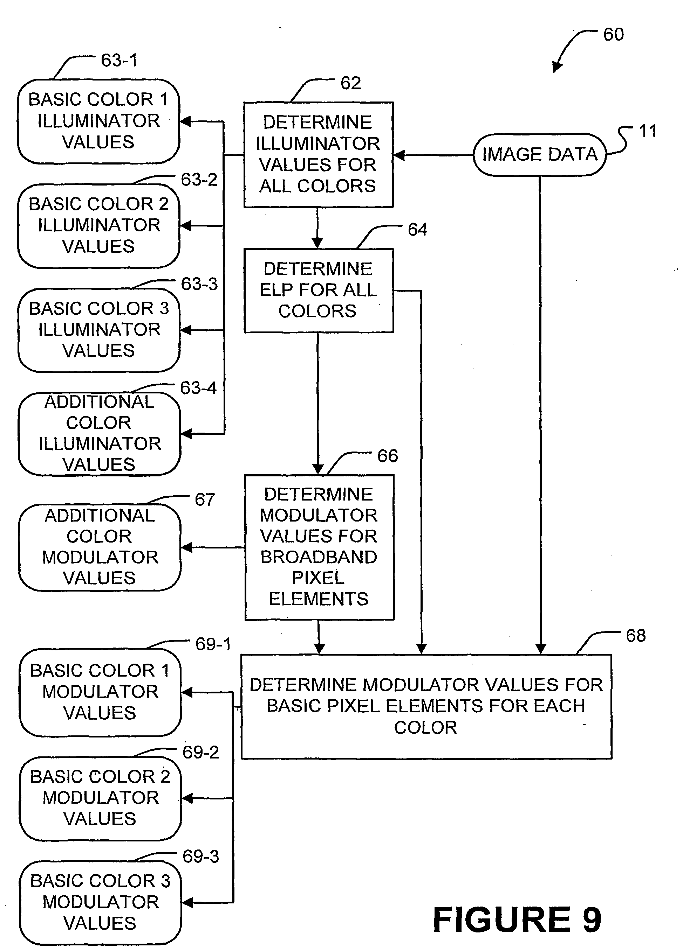

Controller **19** may correct modulator control signals for the elements corresponding to the basic colors to compensate for the fact that light of the basic colors passes through the broadband elements. Figure 9 illustrates a method **60** which may be used to provide this compensation. In block **62** method **60** determines illuminator values **63-1**, **63-2**, **63-3**, for a number of basic colors and illuminator values **63-4** for an extra color. Illuminator values may be obtained in any suitable manner. The illuminator values specify the brightness of light sources in illuminator **14.**

In block **64** method **60** determines the ELP for all of the colors. Block **66** determines modulator values **67** for the broadband pixel elements. The extra pixel modulator values **67** are selected to allow desired amounts of the extra color to pass through each pixel.

Block **68** determines modulator values **69-1**, **69-2** and **69-3** respectively for the pixel elements corresponding to the basic colors. These basic color modulator values may be determined by, for each pixel and each basic color:

- Ascertaining from image data **11** a desired amount of light of the basic color that should pass the modulator for that pixel;
- Subtracting the amount of light of that basic color that will be passed by the broadband pixel (this amount can be ascertained from the ELP for that basic color and extra color modulator values **67**); and,
- Selecting a modulator value for the element of the basic color to let pass the additional light of the basic color (if any) required to make the total amount of light of the basic color that is passed in the pixel equal to the desired amount.

Certain implementations of the invention comprise computer processors which execute software instructions which cause the processors to perform a method of the invention. For example, one or more processors in a controller **19** may implement the method of Figures 1A and/or 9 by executing software instructions in a program memory accessible to the processors. The invention may also be provided in the form of a program product. The program product may comprise any medium which carries a set of computer-readable signals comprising instructions which, when executed by a computer processor, cause the data processor to execute a method of the invention. Program products according to the invention may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like or transmission-type media such as digital or analog communication links.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

As will be apparent to those skilled in the art in the light of the foregoing disclosure, many alterations and modifications are possible in the practice of this invention without departing from the scope thereof. For example:

- the light sources in an illuminator in a display according to the invention are not necessarily LEDs but may be other types of light source.
- the light sources in an illuminator in a display according to the invention are not necessarily red, green and blue but may be of other colors.
- a light source in an illuminator in a display according to the invention may be made up of more than one light emitter.

- an illuminator may include more or fewer than three different colors of light source (although at least three colors are generally required if a full color gamut is to be achieved).
- The actions of the blocks of the methods of Figures 1A and 9 may be performed partly or entirely in different orders in cases where the result from one block is not required to commence the actions of block illustrated as being next in sequence. For example, the ELP for the basic colors are not required until block **68** of Figure 9. The ELP for the basic colors could be determined at any time between blocks **62** and **68**.

Accordingly, the scope of the invention is to be construed in accordance with the scope of the attached claims.

**Claims**

1. A display (10) comprising:

   an illuminator (14, 25) comprising an array (14, 25) of light sources (16, 26, 26R, 26G, 26B), the light sources (16, 26, 26R, 26G, 26B) including light sources of a plurality of colors;
   a modulator (12) disposed to be illuminated by the illuminator (14, 25), the modulator (12) comprising a plurality of pixels (13), each having a plurality of elements (13R, 13G, 13B);
   an illuminator driver circuit (19, 28), the illuminator driver circuit (19, 28) independently controlling intensities of the light sources (16, 26, 26R, 26G, 26B) of each of the plurality of colors, and, within a particular color, independently controlling intensities of the light sources (16, 26, 26R, 26G, 26B) in each of a plurality of areas of the illuminator (14, 25), wherein the light sources (16, 26, 26R, 26G, 26B) in each of the plurality of areas of the illuminator (14, 25) illuminate a corresponding area of the modulator (12) with light having a color and intensity controlled by the illuminator driver circuit (19, 28); and,
   a modulator driver circuit (19) connected to control modulation of the light from the illuminator (14, 25) by the pixel elements (13R, 13G, 13B);
   wherein the array (14, 25) comprises first light sources (16, 26, 26R, 26G, 26B) configured to emit light of a first color and second light sources (16, 26, 26R, 26G, 26B) configured to emit light of a second color, the light emitted by the light sources (16, 26, 26R, 26G, 26B) of each color is distributed according to a corresponding point spread function representing the luminance as a function of a position along the modulator, **characterised in that** the point spread function of each of the first light sources has a full width at half maximum wider than the full width at half maximum of the point spread function of each of the second light sources, **in that** each of the first light sources have greater light output than the second light sources, and **in that** the first light sources are more widely spaced apart from one another in the array than the second light sources.

2. A display (10) according to claim 1 wherein light sources (16, 26, 26R, 26G, 26B) of each color are spaced apart from one another in proportion to the full width at half maximum of the corresponding point spread function.

3. A display (10) according to claim 1 wherein light sources (16, 26, 26R, 26G, 26B) of each color are spaced apart from one another such that the point spread functions of light emitted from adjacent light sources of that color overlap.

4. A display (10) according to any one of claims 1 to 3 wherein, at maximum light output, the light sources (16, 26, 26R, 26G, 26B) of each of the different colors illuminate the modulator (12) with an average intensity that is within 15% of an average intensity of the light of each of the other colors.

5. A display (10) according to claim 1 wherein the array (14, 25) includes a different number of discrete light sources (16, 26, 26R, 26G, 26B) of each of the plurality of colors.

6. A display (10) according to claim 5 wherein a maximum light output of one of the colors multiplied by the number of light sources of that color is substantially the same for each of the colors.

7. A display (10) according to claim 1 wherein a ratio of the spacing of the first light sources (16, 26, 26R, 26G, 26B) to the spacing of the second light sources (16, 26, 26R, 26G, 26B) is within 15% of a ratio of the first full width at half maximum to the second full width at half maximum.

8. A display (10) according to any one of claims 1 to 7 comprising a controller (19) configured to control the modulator driver circuit (19) based on both image data (11) and a light pattern projected onto the modulator (12) by the illuminator (14, 25).

**9.** A display (10) according to claim 8 wherein the controller (19) comprises means (22-1, 22-2, 22-3, 64) for estimating a light pattern projected onto the modulator (12) by the illuminator (14, 25) for each of the plurality of colors.

**10.** A display (10) according to claim 9 wherein the controller (19) comprises means (23-1, 23-2, 23-3, 66) for determining a modulator driving signal (18, 18-1, 18-2, 18-3) for each of the plurality of colors based, for each color, on the image data (11) for the color and an estimated light pattern for the color.

**11.** A method (20, 60) for displaying images at a viewing area of a display according to any of the previous claims, the method comprising:

driving the array (14, 25) in response to a control signal (17, 17-1, 17-2, 17-3, 63-1, 63-2, 63-3, 63-4); and, controlling (23-1, 23-2, 23-3, 66, 68) the pixels (13) of the modulator (12).

**Patentansprüche**

**1.** Display (10) umfassend:

eine Beleuchtungseinrichtung (14, 25), umfassend eine Anordnung (14, 25) von Lichtquellen (16, 26, 26R, 26G, 26B), wobei die Lichtquellen (16, 26, 26R, 26G, 26B) Lichtquellen einer Mehrzahl von Farben enthalten;
einen Modulator (12), der angeordnet ist, um von der Beleuchtungseinrichtung (14, 25) beleuchtet zu werden, wobei der Modulator (12) eine Mehrzahl von Pixeln (13) umfasst, die jeweils eine Mehrzahl von Elementen (13R, 13G, 13B) aufweisen,
eine Beleuchtungseinrichtung-Ansteuerungsschaltung (19, 28), wobei die Beleuchtungseinrichtung-Ansteuerungsschaltung (19, 28) unabhängig Intensitäten der Lichtquellen (16, 26, 26R, 26G, 26B) jeder der Mehrzahl von Farben steuert, und innerhalb einer bestimmten Farbe unabhängig Intensitäten der Lichtquellen (16, 26, 26R, 26G, 26B) in jedem einer Mehrzahl von Bereichen der Beleuchtungseinrichtung (14, 25) steuert, wobei die Lichtquellen (16, 26, 26R, 26G, 26B) in jedem der Mehrzahl von Bereichen der Beleuchtungseinrichtung (14, 25) einen entsprechenden Bereich des Modulators (12) mit Licht beleuchten, das eine Farbe und Intensität aufweist, die durch die Beleuchtungseinrichtung-Ansteuerungsschaltung (19, 28) gesteuert werden; und
eine Modulator-Ansteuerungsschaltung (19), die angeschlossen ist, um die Modulation des Lichts von der Beleuchtungseinrichtung (14, 25) durch die Pixelelemente (13R, 13G, 13B) zu steuern;
wobei die Anordnung (14, 25) erste Lichtquellen (16, 26, 26R, 26G, 26B) umfasst, die konfiguriert sind, um Licht einer ersten Farbe auszustrahlen, und zweite Lichtquellen (16, 26, 26R, 26G, 26B), die konfiguriert sind, um Licht einer zweiten Farbe auszustrahlen, wobei das von den Lichtquellen (16, 26, 26R, 26G, 26B) ausgestrahlte Licht jeder Farbe gemäß einer entsprechenden Punktausbreitungsfunktion verbreitet wird, die die Luminanz als eine Funktion einer Position entlang des Modulators darstellt, **dadurch gekennzeichnet, dass** die Punktausbreitungsfunktion jeder der ersten Lichtquellen eine volle Breite bei halbem Maximum aufweist, die breiter als die volle Breite bei halbem Maximum der Punktausbreitungsfunktion jeder der zweiten Lichtquellen ist, dass jede der ersten Lichtquellen eine größere Lichtleistung aufweist als die zweiten Lichtquellen und dass die ersten Lichtquellen in der Anordnung einen größeren Abstand voneinander aufweisen als die zweiten Lichtquellen.

**2.** Display (10) nach Anspruch 1, wobei die Lichtquellen (16, 26, 26R, 26G, 26B) jeder Farbe im Verhältnis zur vollen Breite bei halbem Maximum der entsprechenden Punktausbreitungsfunktion voneinander beabstandet sind.

**3.** Display (10) nach Anspruch 1, wobei die Lichtquellen (16, 26, 26R, 26G, 26B) jeder Farbe derart voneinander beabstandet sind, dass sich die Punktausbreitungsfunktionen von Licht, das von benachbarten Lichtquellen dieser Farbe ausgestrahlt wird, überlappen.

**4.** Display (10) nach einem der Ansprüche 1 bis 3, wobei bei maximaler Lichtleistung die Lichtquellen (16, 26, 26R, 26G, 26B) jeder der verschiedenen Farben den Modulator (12) mit einer durchschnittlichen Intensität beleuchten, die innerhalb von 15% einer durchschnittlichen Intensität des Lichts jeder der anderen Farben liegt.

**5.** Display (10) nach Anspruch 1, wobei die Anordnung (14, 25) eine unterschiedliche Anzahl einzelner Lichtquellen (16, 26, 26R, 26G, 26B) jeder der Mehrzahl von Farben enthält.

**6.** Display (10) nach Anspruch 5, wobei eine maximale Lichtleistung einer der Farben, multipliziert mit der Anzahl der Lichtquellen dieser Farbe, für jede der Farben im Wesentlichen gleich ist.

7. Display (10) nach Anspruch 1, wobei ein Verhältnis der Beabstandung der ersten Lichtquellen (16, 26, 26R, 26G, 26B) zur Beabstandung der zweiten Lichtquellen (16, 26, 26R, 26G, 26B) innerhalb von 15% des Verhältnisses der ersten vollen Breite bei halbem Maximum zur zweiten vollen Breite bei halbem Maximum liegt.

8. Display (10) nach einem der Ansprüche 1 bis 7, umfassend eine Steuerung (19), die konfiguriert ist, um die Modulator-Ansteuerungsschaltung (19) basierend auf sowohl Bilddaten (11) als auch einem Lichtmuster zu steuern, das von der Beleuchtungseinrichtung (14, 25) auf den Modulator (12) projiziert wird.

9. Display (10) nach Anspruch 8, wobei die Steuerung (19) Mittel (22-1, 22-2, 22-3, 64) zum Annehmen eines Lichtmusters umfasst, das von der Beleuchtungseinrichtung (14, 25) für jede der Mehrzahl von Farben auf den Modulator (12) projiziert wird.

10. Display (10) nach Anspruch 9, wobei die Steuerung (19) Mittel (23-1, 23-2, 23-3, 66) zum Bestimmen eines Modulator-Ansteuerungssignals (18, 18-1, 18-2, 18-3) für jede der Mehrzahl von Farben umfasst, basierend, für jede Farbe, auf den Bilddaten (11) für die Farbe und einem angenommenen Lichtmuster für die Farbe.

11. Verfahren (20, 60) zum Anzeigen von Bildern auf einem Sichtbereich eines Displays nach einem der vorhergehenden Ansprüche, wobei das Verfahren umfasst:

Ansteuern der Anordnung (14, 25) in Reaktion auf ein Steuerungssignal (17, 17-1, 17-2, 17-3, 63-1, 63-2, 63-3, 63-4); und
Steuern (23-1, 23-2, 23-3, 66, 68) der Pixel (13) des Modulators (12).

## Revendications

1. Dispositif d'affichage (10) comprenant :

un illuminateur (14, 25) comprenant un réseau (14, 25) de sources de lumière (16, 26, 26R, 26G, 26B), les sources de lumière (16, 26, 26R, 26G, 26B) comprenant des sources de lumière d'une pluralité de couleurs ;
un modulateur (12) disposé pour être illuminé par l'illuminateur (14, 25), le modulateur (12) comprenant une pluralité de pixels (13), ayant chacun une pluralité d'éléments (13R, 13G, 13B) ;
un circuit de commande d'illuminateur (19, 28), le circuit de commande d'illuminateur (19, 28) commandant de manière indépendante des intensités des sources de lumière (16, 26, 26R, 26G, 26B) de chacune de la pluralité de couleurs, et, dans une couleur particulière, commandant de manière indépendante des intensités des sources de lumière (16, 26, 26R, 26G, 26B) dans chacune de la pluralité de zones de l'illuminateur (14, 25), dans lequel les sources de lumière (16, 26, 26R, 26G, 26B) dans chacune de la pluralité de zones de l'illuminateur (14, 25) illuminent une zone correspondante du modulateur (12) avec une lumière ayant une couleur et une intensité commandées par le circuit de commande d'illuminateur (19, 28) ; et,
un circuit de commande de modulateur (19) connecté pour commander la modulation de la lumière provenant de l'illuminateur (14, 25) par les éléments de pixel (13R, 13G, 13B) ;
dans lequel le réseau (14, 25) comprend des premières sources de lumière (16, 26, 26R, 26G, 26B) configurées pour émettre une lumière d'une première couleur et des deuxièmes sources de lumière (16, 26, 26R, 26G, 26B) configurées pour émettre une lumière d'une deuxième couleur, la lumière émise par les sources de lumière (16, 26, 26R, 26G, 26B) de chaque couleur est distribuée suivant une fonction d'étalement du point correspondante représentant la luminance comme une fonction d'une position le long du modulateur, **caractérisé en ce que** la fonction d'étalement du point de chacune des premières sources de lumière a une largeur totale à la moitié du maximum plus grande que la largeur totale à la moitié du maximum de la fonction d'étalement du point de chacune des deuxièmes sources de lumière, **en ce que** chacune des premières sources de lumière a un rendement lumineux supérieur aux deuxièmes sources de lumière, et **en ce que** les premières sources de lumière sont espacées plus largement l'une de l'autre dans le réseau que les deuxièmes sources de lumière.

2. Dispositif d'affichage (10) selon la revendication 1, dans lequel des sources de lumière (16, 26, 26R, 26G, 26B) de chaque couleur sont espacées l'une de l'autre en proportion de la largeur totale à la moitié du maximum de la fonction d'étalement du point correspondante.

**3.** Dispositif d'affichage (10) selon la revendication 1, dans lequel des sources de lumière (16, 26, 26R, 26G, 26B) de chaque couleur sont espacées l'une de l'autre de manière que les fonctions d'étalement du point d'une lumière émise à partir de sources de lumière adjacentes de cette couleur se chevauchent.

**4.** Dispositif d'affichage (10) selon l'une quelconque des revendications 1 à 3, dans lequel, au rendement lumineux maximal, les sources de lumière (16, 26, 26R, 26G, 26B) de chacune des différentes couleurs illuminent le modulateur (12) avec une intensité moyenne qui est dans les 15% d'une intensité moyenne de la lumière de chacune des autres couleurs.

**5.** Dispositif d'affichage (10) selon la revendication 1, dans lequel le réseau (14, 25) comprend un nombre différent de sources de lumière discrètes (16, 26, 26R, 26G, 26B) de chacune de la pluralité de couleurs.

**6.** Dispositif d'affichage (10) selon la revendication 5, dans lequel un rendement lumineux maximal d'une des couleurs multiplié par le nombre de sources de lumière de cette couleur est sensiblement le même pour chacune des couleurs.

**7.** Dispositif d'affichage (10) selon la revendication 1, dans lequel un rapport entre l'espacement des premières sources de lumière (16, 26, 26R, 26G, 26B) et l'espacement des deuxièmes sources de lumière (16, 26, 26R, 26G, 26B) est dans les 15% d'un rapport entre la première largeur totale à la moitié du maximum et la deuxième largeur totale à la moitié du maximum.

**8.** Dispositif d'affichage (10) selon l'une quelconque des revendications 1 à 7, comprenant un contrôleur (19) configuré pour commander le circuit de commande de modulateur (19) sur la base à la fois de données d'image (11) et d'un motif lumineux projeté sur le modulateur (12) par l'illuminateur (14, 25).

**9.** Dispositif d'affichage (10) selon la revendication 8, dans lequel le contrôleur (19) comprend des moyens (22-1, 22-2, 22-3, 64) pour estimer un motif lumineux projeté sur le modulateur (12) par l'illuminateur (14, 25) pour chacune de la pluralité de couleurs.

**10.** Dispositif d'affichage (10) selon la revendication 9, dans lequel le contrôleur (19) comprend des moyens (23-1, 23-2, 23-3, 66) pour déterminer un signal de commande de modulateur (18, 18-1, 18-2, 18-3) pour chacune de la pluralité de couleurs sur la base, pour chaque couleur, des données d'image (11) pour la couleur et d'un motif lumineux estimé pour la couleur.

**11.** Procédé (20, 60) pour l'affichage d'images au niveau d'une zone de visualisation d'un dispositif d'affichage selon l'une quelconque des revendications précédentes, le procédé comprenant :

la commande du réseau (14, 25) en réponse à un signal de commande (17, 17-1, 17-2, 17-3, 63-1, 63-2, 63-3, 63-4) ; et,
la commande (23-1, 23-2, 23-3, 66, 68) des pixels (13) du modulateur (12).

**FIGURE 1**

**FIGURE 1A**

21

DRIVING CIRCUIT

28

27B
27G
27R

RED CONTROL
SIGNALS

GREEN CONTROL
SIGNALS

BLUE CONTROL
SIGNALS

26R
26B
26G

25

**FIGURE 2**

```
— · · — · ·   RED
· · · · · · · ·   GREEN
— · · — · —   BLUE
```

POSITION ALONG MODULATOR

**FIGURE 3**

FIGURE 4

**FIGURE 5**

POSITION ALONG MODULATOR

**FIGURE 6**

POSITION ALONG MODULATOR

**FIGURE 7**

**FIGURE 8**

60

63-1

BASIC COLOR 1
ILLUMINATOR
VALUES

62

DETERMINE
ILLUMINATOR
VALUES FOR
ALL COLORS

IMAGE DATA

11

63-2

BASIC COLOR 2
ILLUMINATOR
VALUES

63-3

BASIC COLOR 3
ILLUMINATOR
VALUES

64

DETERMINE
ELP FOR ALL
COLORS

63-4

ADDITIONAL
COLOR
ILLUMINATOR
VALUES

67

ADDITIONAL
COLOR
MODULATOR
VALUES

66

DETERMINE
MODULATOR
VALUES FOR
BROADBAND
PIXEL
ELEMENTS

69-1

BASIC COLOR 1
MODULATOR
VALUES

68

DETERMINE MODULATOR VALUES FOR
BASIC PIXEL ELEMENTS FOR EACH
COLOR

69-2

BASIC COLOR 2
MODULATOR
VALUES

69-3

BASIC COLOR 3
MODULATOR
VALUES

**FIGURE 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03077013A3 A
- US 2002050958 A1
- US 2004218388 A1
- WO 2004031844 A
- JP 2002140038 A
- JP H1039301 B
- EP 1462844 A
- JP 2002099250 A